# FASCICULE DE BREVET EUROPEEN

(11) **EP 3 639 235 B1**
(45) Date de publication et mention de la délivrance du brevet: **20.05.2026**
(21) Numéro de dépôt: 18729440.0
(22) Date de dépôt: 13.06.2018
(51) Int. Cl.: G06Q 30/02, G06F 21/41, G06Q 20/32, G06Q 20/40, G06Q 30/0226, G06Q 20/38, H04L 9/40

(54) **PROCÉDÉ DE GESTION D'IDENTIFIANTS DE FIDÉLITÉ, PROCÉDÉ DE TRAITEMENT DE DONNÉES DE FIDÉLITÉ, SERVEUR, DISPOSITIF DE TRANSACTION ET PROGRAMMES CORRESPONDANTS**
VERFAHREN ZUR VERWALTUNG VON LOYALITÄTSIDENTIFIKATOREN, VERFAHREN ZUR VERARBEITUNG VON LOYALITÄTSDATEN, SERVER, TRANSAKTIONSVORRICHTUNG UND ENTSPRECHENDE PROGRAMME
METHOD FOR MANAGING LOYALTY IDENTIFIERS, METHOD FOR PROCESSING LOYALTY DATA, SERVER, TRANSACTION DEVICE AND CORRESPONDING PROGRAMS

(30) Priorité: 13.06.2017 FR 1755283
(43) Date de publication de la demande: 22.04.2020
(73) Titulaire: Banks and Acquirers International Holding, 75015 Paris (FR)
(72) Inventeur: QUENTIN, Pierre, 95880 Enghien Les Bains (FR)
(74) Mandataire: LLR
(86) Numéro de dépôt international: PCT/EP2018/065575
(87) Numéro de publication internationale: WO 2018/229089

(56) Documents cités:
- WO-A2-2012/125852
- US-A1- 2005 278 547
- US-A1- 2013 282 468
- US-B1- 8 892 474

## Description

### 1. Domaine de l'invention

La présente invention se rapporte au domaine des opérations de paiement et plus particulièrement à la gestion optimisée de données de fidélisation de clientèle.

### 2. Art Antérieur

De tous temps, la fidélisation d'une clientèle a été, pour un commerçant, un moyen de s'assurer des revenus réguliers, et donc de développer et de pérenniser son activité. Depuis plusieurs années, cependant, on constate que deux grands types de technologies coexistent, afin de s'assurer une certaine fidélité d'une clientèle.

Le premier type, le plus basique, réside dans l'édition d'une carte de fidélité « physique », par exemple sous forme d'une carte de fidélité « papier » ou « plastique », tamponnable ou non, ou présentant un code barre destiné à être scanné.

La carte de fidélité tamponnable permet, lors d'un passage en caisse, l'octroi d'un ou plusieurs tampons en fonction par exemple du montant de son achat. Une telle carte de fidélité peut être couplée à la transmission aux clients, généralement par courrier papier, de coupons de réduction ou de coupons de fidélité.

La carte de fidélité à code barre permet quant à elle par exemple de bénéficier d'une réduction immédiate sur un achat que l'utilisateur est en train d'effectuer, ou encore de cumuler des points de fidélité associés à l'opération d'achat afin d'obtenir ultérieurement un avantage le récompensant de sa fidélité. Cette carte de fidélité à code barre peut également être couplée à la transmission aux clients, généralement par courrier électronique et/ou SMS, de coupons de réduction ou de coupons de fidélité.

Ces cartes de fidélité « physiques » doivent donc être présentées au commerçant par l'utilisateur, que ce soit pour être tamponnées ou scannées, s'il souhaite bénéficier des avantages du programme de fidélité auquel il a souscrit/adhéré. De plus, ce type de cartes de fidélité « physiques » nécessite également bien souvent que l'utilisateur fournisse, au commerçant, des informations complémentaires permettant de l'identifier au sein du programme de fidélité, comme par exemple ses coordonnées (nom et adresse), son adresse de courrier électronique et/ou son numéro de téléphone mobile.

Le deuxième type de mise en œuvre de la fidélisation de clientèle consiste à utiliser les solutions technologiques de communication existantes. Ce deuxième type s'appuie par exemple sur une carte de fidélité « virtuelle » associée à un numéro spécifique (par exemple un identifiant spécifique correspondant à un numéro d'adhérent), ce numéro spécifique étant utilisé de manière extensive, avec les coordonnées du client (adresse email, numéro de téléphone, réseau sociaux) pour proposer à celui-ci, via divers canaux de communication, non seulement une gestion d'un programme spécifique de fidélité mais également une transmission d'offres commerciales et de coupons de réduction. Par exemple, la transmission de ces informations peut être réalisée par courrier électronique, par SMS ou encore via des messages de type "In-App" (terme provenant de l'anglais et décrivant une technologie consistant à transmettre des notifications à une application installée sur un téléphone intelligent, ou smartphone, lorsque l'utilisateur utilise l'application en question). Plus récemment, l'intégration de la gestion de la fidélité dans les smartphones a été améliorée grâce aux wallets (de l'anglais pour "portefeuille").

Cependant, même avec ce deuxième type de carte de fidélité « virtuelle », l'utilisateur doit ouvrir, sur son smartphone, une application dédiée à la gestion de fidélité, pour y sélectionner et afficher la carte de fidélité correspondant au commerçant avec lequel il est en train d'effectuer une transaction, soit pour que le commerçant scanne le code barre associé (un peu comme une carte de fidélité « physique »), soit pour que le commerçant saisisse le numéro d'adhérent dans son système de gestion de la fidélité de ses clients.

Il existe donc un besoin de fournir aux utilisateurs une solution de fidélisation optimale en terme d'ergonomie tout en étant simple et peu couteuse pour le commerçant. La demande de brevet US2013/282468 A1 et le brevet US8892474 B1 divulguent des solutions de gestion de fidélité de l'art antérieur.

L'invention est définie par les revendications indépendantes. Des modes de réalisation supplémentaires sont définis par les revendications dépendantes.

### 3. Résumé

La technique proposée ne présente pas ces inconvénients de l'art antérieur. Plus particulièrement, selon un aspect, la technique proposée se rapporte à un procédé de gestion d'identifiants de fidélité. Ce procédé est mis en œuvre dans un serveur de gestion d'identifiants de fidélité et comprend une phase d'initialisation comprenant une étape de génération d'un identifiant général de fidélité pour un utilisateur préalablement identifié.

Ainsi, selon ce premier aspect de la technique proposée, le procédé de gestion d'identifiants de fidélité permet d'associer, dans une phase préalable d'initialisation, un identifiant de fidélité général à un utilisateur préalablement identifié, de façon à simplifier la gestion des différents programmes spécifiques de fidélité auxquels l'utilisateur en question a adhéré.

Pour ce faire, le serveur de gestion d'identifiants de fidélité crée donc, par exemple dans une base de données, un identifiant général de fidélité, afin de gérer de manière centralisée toutes les données de fidélité associées à cet utilisateur, quels que soient les commerçants concernés.

Cette phase préalable d'initialisation est mise en œuvre de préférence en dehors d'un achat effectué par l'utilisateur, de manière à ce que l'identifiant général de fidélité de l'utilisateur soit disponible au moment de ces achats ultérieurs.

Selon un aspect particulier, la phase d'initialisation comprend également les étapes suivantes, respectivement avant et après l'étape de génération :
- réception, en provenance d'un terminal de communication de l'utilisateur, d'une requête de génération d'un identifiant général de fidélité associé à l'utilisateur, la requête de génération comprenant au moins une donnée d'identification de l'utilisateur ;
- transmission, à destination du terminal de communication de l'utilisateur, d'une réponse comprenant l'identifiant général de fidélité généré.

Selon un mode de réalisation particulier, la phase d'initialisation est mise en œuvre suite à la réception d'une requête émise par un terminal de communication de l'utilisateur (par exemple un smartphone ou une tablette, ou encore un ordinateur).

Cette requête peut par exemple être émise par une application de fidélité préalablement installée sur le terminal de communication de l'utilisateur, via laquelle l'utilisateur peut gérer ses différents programmes de fidélité. Dans la phase d'initialisation, la requête comprend au moins une donnée permettant d'identifier l'utilisateur, de manière à ce que le serveur de gestion d'identifiants de fidélité puisse générer un identifiant général unique pour l'utilisateur en question. Une telle donnée d'identification de l'utilisateur correspond par exemple à son nom et/ou son prénom et/ou un pseudo, et/ou un numéro unique généré par l'application elle-même.

De plus, une fois l'identifiant général de fidélité généré, le serveur de gestion d'identifiants de fidélité le transmet, en réponse à la requête, au terminal de communication de l'utilisateur. Dans le cas où une application de fidélité dédiée a émis la requête, cette application reçoit l'identifiant général de fidélité associé à l'utilisateur et l'utilise de manière à simplifier, en local sur le terminal de communication de l'utilisateur, la gestion de sa fidélité.

Selon un mode de réalisation particulier, le procédé comprend en outre les étapes suivantes :
- réception, en provenance du terminal de communication de l'utilisateur ou d'un dispositif de transaction d'un commerçant, d'une requête de mise à jour de l'identifiant général de fidélité de l'utilisateur, la requête de mise à jour comprenant l'identifiant général de fidélité de l'utilisateur et au moins un identifiant spécifique de fidélité de l'utilisateur pour le commerçant ;
- mise à jour de l'identifiant général de fidélité par association entre le au moins un identifiant spécifique de fidélité de l'utilisateur pour le commerçant et l'identifiant général de fidélité de l'utilisateur.

Selon ce mode de réalisation, le procédé proposé permet d'associer une pluralité d'identifiants spécifiques de fidélité de l'utilisateur, pour une pluralité de commerçants, à son identifiant général de fidélité.

L'identifiant général de fidélité de l'utilisateur peut donc être mis à jour, par exemple, via l'application de fidélité installée sur le terminal de communication de l'utilisateur, pour ajouter une carte de fidélité spécifique à un commerçant.

Pour ce faire, le serveur de gestion d'identifiants de fidélité reçoit une requête de mise à jour, comprenant à la fois l'identifiant général de fidélité de l'utilisateur (généré lors de la phase préalable d'initialisation) et un identifiant spécifique de fidélité de l'utilisateur pour le commerçant donné, comme par exemple un numéro d'adhérent. Le serveur peut alors associer cet identifiant spécifique de fidélité à l'identifiant général de fidélité de l'utilisateur. De cette manière, l'utilisation de l'identifiant général de fidélité permet la gestion du programme de fidélité de l'utilisateur pour le commerçant concerné.

Là encore, ces étapes de mise à jour de l'identifiant général de fidélité de l'utilisateur sont mises en œuvre de préférence en dehors d'un achat effectué par l'utilisateur.

Cependant, ces étapes peuvent également être mises en œuvre au moment d'un achat chez un commerçant, via le dispositif de transaction utilisé pour cet achat. Cette mise à jour « intelligente » permet ainsi à un utilisateur de bénéficier pour un achat en cours d'avantages fidélité même s'il n'était pas adhérent au programme fidélité du commerçant avant son achat. Cette mise en œuvre facilite à nouveau la gestion de la fidélité pour l'utilisateur.

Selon une caractéristique particulière, le procédé comprend en outre une étape de transmission, à destination du terminal de communication de l'utilisateur, d'une information représentative de l'identifiant général de fidélité mis à jour.

Ainsi, selon ce mode de réalisation, lorsque l'application de fidélité installée sur le terminal de communication de l'utilisateur a émis une requête de mise à jour de l'identifiant général de fidélité de l'utilisateur, elle reçoit du serveur de gestion d'identifiants de fidélité une réponse à sa requête.

De plus, lorsque la requête a été émise par un dispositif de transaction d'un commerçant (par exemple au moment d'un achat), et non par l'application de fidélité elle-même, cette dernière reçoit quand même une information lui permettant d'avoir connaissance de la mise à jour effectuée. De cette manière, l'utilisateur peut toujours avoir à sa disposition un état à jour de son identifiant général de fidélité et donc de ses programmes spécifiques de fidélité, via son application installée sur son terminal de communication.

Selon un mode de réalisation particulier, le procédé comprend en outre les étapes suivantes :
- réception, en provenance d'un dispositif de transaction associé à un commerçant, d'une requête d'obtention d'un identifiant spécifique de fidélité de l'utilisateur pour le commerçant, la requête d'obtention comprenant l'identifiant général de fidélité de l'utilisateur ;
- obtention d'au moins une donnée d'identification du commerçant ;
- recherche, à partir de la donnée d'identification du commerçant et de l'identifiant général de fidélité de l'utilisateur, de l'identifiant spécifique de fidélité de l'utilisateur pour le commerçant :
   ∘ lorsque la recherche est positive, transmission, à destination du dispositif de transaction, d'une réponse comprenant l'identifiant spécifique de fidélité de l'utilisateur pour le commerçant ;
   ∘ lorsque la recherche est négative, transmission, à destination du dispositif de transaction, d'une réponse négative.

Selon ce mode de réalisation, le procédé proposé permet donc à un dispositif de transaction (un terminal de paiement électronique, une caisse enregistreuse ...) de récupérer, auprès du serveur de gestion d'identifiants de fidélité, un identifiant spécifique de fidélité pour un commerçant à partir de l'identifiant général de fidélité de l'utilisateur. De cette manière, l'utilisateur, lorsqu'il souhaite bénéficier des avantages d'un programme de fidélité correspondant à un achat effectué chez un commerçant, peut fournir uniquement son identifiant général de fidélité, sans avoir à chercher son identifiant spécifique de fidélité. Cela lui simplifie grandement la gestion de sa fidélité, surtout lorsque cet identifiant général de fidélité peut être fourni au dispositif de transaction de manière « automatique », par exemple via le moyen de paiement utilisé par l'utilisateur pour effectuer son achat ou via son terminal de communication, comme décrit plus en détail ci-après.

Pour ce faire, le dispositif de transaction transmet donc une requête au serveur de gestion d'identifiants de fidélité en vue d'obtenir l'identifiant spécifique de fidélité associé à l'utilisateur pour le commerçant donné. Cette requête doit contenir au minimum l'identifiant général de fidélité de l'utilisateur, obtenu de différentes façons détaillées ci-après.

A réception de cette requête, le serveur de gestion d'identifiants de fidélité obtient une identification du commerçant, par exemple via une donnée présente également dans la requête (une clé publique du dispositif de transaction, un identifiant du commerçant ou du dispositif de transaction) ou via une information de localisation du dispositif de transaction lui permettant de trouver le commerçant associé.

A partir de ces deux informations (identifiant général de fidélité de l'utilisateur et identification du commerçant), le serveur de gestion d'identifiants de fidélité peut rechercher si l'identifiant général de fidélité de l'utilisateur est associé à un identifiant spécifique de fidélité de l'utilisateur pour ce commerçant.

Si c'est le cas, le serveur renvoie, en réponse à la requête, cet identifiant spécifique de fidélité.

Sinon, le serveur renvoie une réponse négative, indiquant que l'identifiant général de fidélité de l'utilisateur ne permet pas de gérer la fidélité spécifique de l'utilisateur pour ce commerçant.

Ces étapes d'utilisation de l'identifiant général de fidélité de l'utilisateur sont par exemple mises en œuvre au moment d'un achat effectué par l'utilisateur, classiquement au début ou à la fin de la transaction (comme quand l'utilisateur présente une carte de fidélité « physique » à tamponner ou à scanner).

Selon un autre aspect, la technique proposée se rapporte à un procédé de traitement de données de fidélité. Ce procédé est mis en œuvre dans un dispositif de transaction d'un commerçant et comprend les étapes suivantes :
- obtention, en provenance d'un utilisateur, d'un identifiant général de fidélité de l'utilisateur ;
- émission, à destination d'un serveur de gestion d'identifiants de fidélité, d'une requête d'obtention d'un identifiant spécifique de fidélité de l'utilisateur pour le commerçant, la requête d'obtention comprenant au moins l'identifiant général de fidélité de l'utilisateur ;
- réception, en provenance du serveur de gestion d'identifiants de fidélité, d'une réponse à la requête d'obtention et, si la réponse comprend l'identifiant spécifique de fidélité de l'utilisateur pour le commerçant :
- traitement d'au moins une donnée de fidélité associée à l'identifiant spécifique de fidélité de l'utilisateur pour le commerçant.

Ainsi, selon ce deuxième aspect de la technique proposée, mis en œuvre dans un dispositif de transaction (un terminal de paiement électronique, une caisse enregistreuse ...) au moment d'un achat effectué par l'utilisateur, le procédé de traitement de données de fidélité permet à ce dispositif de transaction de récupérer, auprès du serveur de gestion d'identifiants de fidélité, un identifiant spécifique de fidélité pour le commerçant associé au dispositif de transaction, à partir de l'identifiant général de fidélité de l'utilisateur, de façon à pouvoir gérer les données de fidélité de l'utilisateur spécifiques au commerçant en question.

Pour ce faire, le dispositif de transaction obtient l'identifiant général de fidélité de l'utilisateur, par exemple via le moyen de paiement utilisé par l'utilisateur (sa carte de paiement, son smartphone ....) et envoie une requête au serveur de gestion d'identifiants de fidélité pour récupérer l'identifiant spécifique de fidélité de l'utilisateur pour le commerçant donné.

Si l'utilisateur est bien affilié au programme de fidélité du commerçant, et s'il a mis à jour son identifiant de fidélité général avec son identifiant spécifique de fidélité, alors le serveur de gestion d'identifiants de fidélité transmet, en réponse à la requête du dispositif de transaction, cet identifiant spécifique de fidélité. Le dispositif de transaction peut ensuite utiliser cet identifiant spécifique de fidélité pour gérer le programme de fidélité spécifique de l'utilisateur, en relation avec l'achat effectué.

Selon un aspect particulier, le procédé comprend les étapes suivantes, si la réponse est négative :
- obtention d'un identifiant spécifique de fidélité de l'utilisateur pour le commerçant ;
- émission, à destination du serveur de gestion d'identifiants de fidélité, d'une requête de mise à jour de l'identifiant de fidélité de l'utilisateur, la requête de mise à jour comprenant l'identifiant général de fidélité de l'utilisateur et l'identifiant spécifique de fidélité de l'utilisateur pour le commerçant ;
- traitement d'au moins une donnée de fidélité associée à l'identifiant spécifique de fidélité de l'utilisateur pour le commerçant.

Ainsi, selon ce mode de réalisation, si l'utilisateur n'est pas affilié/adhérent au programme de fidélité du commerçant, ou s'il n'a pas préalablement mis à jour son identifiant général de fidélité avec son identifiant spécifique de fidélité, alors le serveur de gestion d'identifiants de fidélité ne peut pas trouver l'identifiant spécifique de fidélité requis, et transmet une réponse négative au dispositif de transaction.

Dans ce cas, le dispositif de transaction est à même de demander une mise à jour de l'identifiant général de fidélité de l'utilisateur pour que soit pris en compte le programme spécifique de fidélité pour le commerçant en question. Cette mise à jour peut se faire après autorisation de l'utilisateur, soit au moment même de la requête de mise à jour, soit de manière préalable par une autorisation « générale » donnée par l'utilisateur (par exemple via l'application de fidélité installée sur son terminal de communication).

Pour effectuer cette mise à jour, le dispositif de transaction transmet une requête au serveur de gestion d'identifiants de fidélité avec l'identifiant général de fidélité de l'utilisateur et l'identifiant spécifique de fidélité de l'utilisateur pour le commerçant en question. Cet identifiant spécifique, s'il existe déjà, peut être fourni au dispositif de transaction par l'utilisateur (par exemple via son moyen de paiement) ou bien il peut être créé et fourni par un serveur spécifique de fidélité du commerçant au moment de l'achat.

En parallèle de cette requête de mise à jour, le dispositif de transaction utilise l'identifiant spécifique de fidélité de l'utilisateur pour gérer son programme de fidélité spécifique, en relation avec l'achat effectué.

Par exemple, les étapes d'obtention d'un identifiant spécifique de fidélité de l'utilisateur pour le commerçant et de traitement sont mises en œuvre via un serveur spécifique de gestion de programmes de fidélité associé au commerçant.

Ainsi, selon ce mode de réalisation, le dispositif de transaction ne gère pas en interne les programmes de fidélité du commerçant et communique donc avec un serveur spécifique de fidélité du commerçant, pour gérer le programme de fidélité spécifique de l'utilisateur, ainsi que pour obtenir, s'il n'existe pas encore, l'identifiant spécifique de fidélité de l'utilisateur pour le commerçant en question.

Selon une caractéristique particulière, l'étape d'obtention d'un identifiant général de fidélité de l'utilisateur est mise en œuvre via des moyens de communication avec un terminal de communication de l'utilisateur appartenant au groupe comprenant :
- NFC;
- Bluetooth ;
- MST (émulation de bande magnétique).

Ainsi, selon ce mode de réalisation, le dispositif de transaction peut obtenir l'identifiant général de fidélité de l'utilisateur par différents moyens.

Par exemple, l'utilisateur peut afficher sur son smartphone (via l'application de fidélité) son identifiant qui peut être scanné. L'identifiant peut également être transmis via des moyens de communication sans fil à très courte distance (Bluetooth) ou sans contact (de type NFC) entre le smartphone de l'utilisateur et le dispositif de transaction. Selon encore une autre variante, l'identifiant peut être fourni par une technique d'émulation du champ magnétique généré par une carte à bande magnétique, par exemple via la transmission de données secondaires. Selon une autre variante, l'identifiant général de fidélité peut prendre la forme d'un code QR, affiché par exemple sur le smartphone de l'utilisateur et lu par le dispositif de transaction. Selon encore une autre variante, l'identifiant général de fidélité peut être saisi manuellement, par l'utilisateur ou le commerçant, sur le dispositif de transaction.

Selon une implémentation préférée, les différentes étapes des procédés décrits ci-dessus, selon la technique proposée, sont mises en œuvre par un ou plusieurs logiciels ou programmes d'ordinateur, comprenant des instructions logicielles destinées à être exécutées par un processeur de données d'un composant relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou terminal de communication capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "composant" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le composant concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le composant concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres composants logiciels.

La technique proposée concerne également un serveur de gestion d'identifiants de fidélité comprenant des moyens de génération d'un identifiant général de fidélité pour un utilisateur préalablement identifié, pour la mise en œuvre du procédé de gestion d'identifiants de fidélité tel que décrit précédemment.

Selon un autre aspect, la technique proposée concerne également un dispositif de transaction comprenant, pour la mise en œuvre des étapes du procédé de traitement de données de fidélité tel que décrit précédemment :
- des moyens d'obtention, en provenance d'un utilisateur, d'un identifiant général de fidélité de l'utilisateur ;
- des moyens d'émission, à destination d'un serveur de gestion d'identifiants de fidélité, d'une requête d'obtention d'un identifiant spécifique de fidélité de l'utilisateur pour le commerçant, la requête d'obtention comprenant au moins l'identifiant général de fidélité de l'utilisateur ;
- des moyens de réception, en provenance du serveur de gestion d'identifiants de fidélité, d'une réponse à la requête d'obtention et, si la réponse comprend l'identifiant spécifique de fidélité de l'utilisateur pour le commerçant :
- des moyens de traitement d'au moins une donnée de fidélité associée à l'identifiant spécifique de fidélité de l'utilisateur pour le commerçant.

Les différents modes de réalisation mentionnés ci-dessus sont combinables entre eux pour la mise en œuvre de la technique proposée.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre les principales étapes d'un procédé de gestion d'identifiants de fidélité, selon un mode de réalisation particulier ;
- les figures 2 et 3 présentent deux diagrammes de séquences présentant les principales étapes d'un procédé de gestion d'identifiants de fidélité et d'un procédé de traitement de données de fidélité, selon deux modes de réalisation particuliers ;
- la figure 4 décrit une architecture simplifiée d'un serveur de gestion d'identifiants de fidélité apte à mettre en œuvre un procédé de gestion d'identifiants de fidélité, selon un mode de réalisation particulier ;
- la figure 5 décrit une architecture simplifiée d'un dispositif de transaction apte à mettre en œuvre un procédé de traitement de données de fidélité, selon un mode de réalisation particulier.

### 5. Description

### 5.1. Principe général

Le principe général de la technique proposée consiste à associer, pour un utilisateur donné, un identifiant de fidélité unique, général, et des programmes de fidélité de différents commerçants. Cette association, ainsi que la mise à jour ultérieure de l'identifiant général de fidélité, est mise en œuvre par un serveur de gestion d'identifiants de fidélité.

La technique proposée permet donc la mise en œuvre d'un système centralisé de gestion d'une pluralité de programmes spécifiques de fidélité pour un utilisateur, via un identifiant général de fidélité.

Ainsi, chaque fois qu'un utilisateur souhaite bénéficier d'avantages de fidélité liés à un programme spécifique de fidélité auquel il a adhéré, il fournit cet identifiant général de fidélité au lieu de fournir l'identifiant de fidélité spécifique adéquat.

D'un point de vue utilisateur, la gestion de la fidélité est donc fortement simplifiée, car la technique proposée permet d'optimiser l'utilisation de cartes de fidélité virtuelles telles que décrites en relation avec l'art antérieur, en les regroupant de manière transparente « derrière » un identifiant général de fidélité. Par exemple, une application de fidélité dédiée installée sur un terminal de communication de l'utilisateur peut lui permettre d'avoir à disposition son identifiant général de fidélité qu'il peut ensuite fournir, lorsqu'il en a besoin, quel que soit le commerçant concerné.

Selon un premier aspect de la technique proposée, la gestion d'un identifiant général de fidélité pour un utilisateur est donc mise en œuvre par un serveur de gestion d'identifiants de fidélité, qui est apte à traduire cet identifiant général de fidélité de l'utilisateur en un identifiant spécifique de fidélité préalablement associé, utilisable ensuite par un dispositif de transaction d'un commerçant pour un gestion spécifique de la fidélité liée à ce commerçant.

Selon un deuxième aspect de la technique proposée, un dispositif de transaction d'un commerçant est apte à communiquer avec le serveur de gestion d'identifiants de fidélité, pour lui transmettre l'identifiant général de fidélité fourni par un utilisateur et recevoir en retour l'identifiant spécifique de fidélité de cet utilisateur pour le commerçant en question, afin de gérer ensuite le programme de fidélité spécifique de l'utilisateur pour ce commerçant.

Enfin, selon un troisième aspect de la technique proposée, une application dédiée à la fidélité installée sur un terminal de communication d'un utilisateur (par exemple un smartphone, une tablette ou un ordinateur) peut lui fournir une interface lui permettant de gérer de manière centralisée ses différents programmes de fidélité, de configurer son profil de fidélité ... Selon ce troisième aspect, cette application dédiée est également apte à communiquer avec le serveur de gestion d'identifiants de fidélité, d'une part pour requérir la création/génération de l'identifiant général de fidélité pour l'utilisateur et, d'autre part pour mettre à jour cet identifiant général de fidélité de l'utilisateur avec les différents programmes spécifiques de fidélité de l'utilisateur, via des identifiants spécifique de fidélité.

Ces trois aspects de la technique proposée sont décrits en détail ci-après.

### 5.2. Procédé de gestion d'identifiants de fidélité

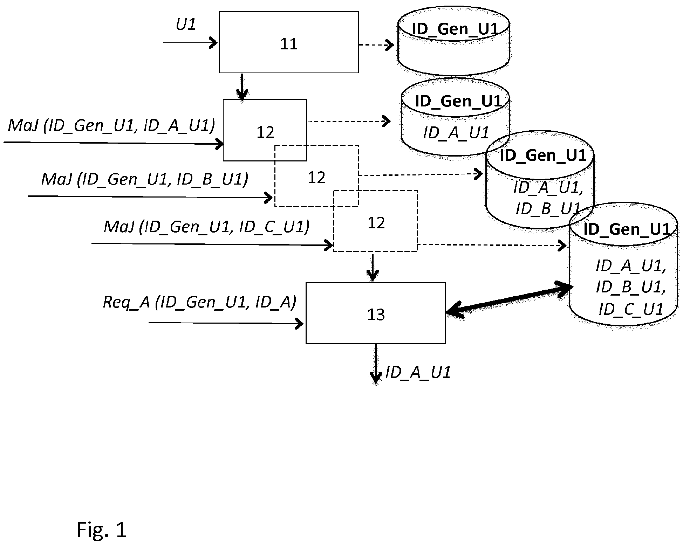

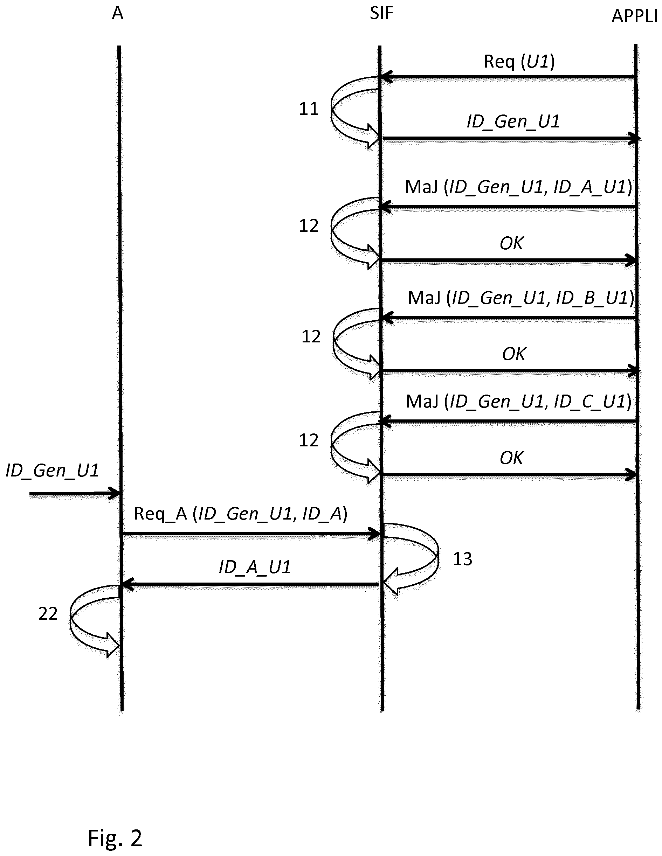

Selon un premier aspect, la technique proposée se rapporte donc à un procédé de gestion d'identifiants de fidélité, mis en œuvre dans un serveur de gestion d'identifiants de fidélité, dont les principales étapes sont illustrées en **figures 1** **et** **2****,** dans un mode de réalisation particulier.

Ce procédé de gestion d'identifiants de fidélité comprend tout d'abord une phase d'initialisation, au cours de laquelle l'identifiant général de fidélité d'un utilisateur *U1* est créé/généré. Ainsi, lors d'une étape 11 de génération, le serveur de gestion d'identifiants de fidélité génère (par exemple dans une base de données, pouvant être manipulée/gérée grâce à une bibliothèque logicielle, ou dans un fichier à plat (Texte ou XML), un identifiant général de fidélité *ID_Gen_U1,* associé à un utilisateur préalablement identifié *U1.*

Cette phase d'initialisation peut être déclenchée sur requête de l'utilisateur, via son terminal de communication, comme illustré en **figure 2****.**

Ainsi, selon ce mode de réalisation, le serveur de gestion d'identifiants de fidélité *SIF* reçoit une requête Req *(U1)* pour la génération d'un identifiant général de fidélité, en provenance d'un terminal de communication de l'utilisateur *U1,* la requête comprenant au moins une information permettant d'identifier l'utilisateur *U1* (par exemple un nom, prénom, pseudo ....). Par exemple, cette requête est émise via une application dédiée *APPLI* installée sur le terminal de communication de l'utilisateur, permettant d'offrir à l'utilisateur une interface de gestion de ses données de fidélité.

L'identifiant général de fidélité est ensuite mis à jour, lors d'une ou plusieurs étapes successives de mise à jour 12, pour lui associer un ou plusieurs identifiants spécifiques de fidélité de l'utilisateur : *ID_A_U1* pour le commerçant A, *ID_B_U1* pour le commerçant B, *ID_C_U1* pour le commerçant C .... De cette manière, ces identifiants spécifiques de fidélité sont accessibles à partir d'un « point d'entrée » unique constitué par l'identifiant général de fidélité, qui peut être enrichi avec d'autres identifiants spécifiques de fidélité au fur et à mesure de ces mises à jour.

Ces étapes de mises à jour peuvent également être déclenchées sur requête de l'utilisateur, via son terminal de communication, en même temps que l'étape de génération d'un identifiant général de fidélité, ou ultérieurement, comme illustré en **figure 2****.**

Ainsi, selon ce mode de réalisation, le serveur de gestion d'identifiants de fidélité SIF reçoit une ou plusieurs requêtes de mise à jour MAJ (*ID_Gen_U1, ID_A_U1),* MAJ (*ID_Gen_U1, ID_B_U1),* MAJ (*ID_Gen_U1, ID_C_U1*) .... de l'identifiant général de fidélité *ID_Gen_U1,* en provenance du terminal de communication de l'utilisateur *U1* (par exemple via l'application *APPLI).* Chaque requête comprend au moins l'identifiant général de fidélité de l'utilisateur *ID_Gen_U1* et l'identifiant spécifique de fidélité du commerçant à associer *ID_A_U1, ID_B_U1, ID_C_U1...*

La **figure 2** illustre trois étapes de mise à jour successives, réalisées avec succès par le serveur de gestion d'identifiants de fidélité *SIF,* qui renvoie par exemple un « OK » à l'application à l'origine des requêtes.

En revanche, si le serveur de gestion d'identifiants de fidélité SIF n'a pas pu mettre en œuvre la mise à jour requise, que ce soit parce que l'identifiant spécifique est déjà associé à l'identifiant général, ou parce que l'identifiant général n'existe pas encore, une réponse d'échec peut être envoyée par le serveur de gestion d'identifiants de fidélité à l'application à l'origine de la requête (cas non illustré).

Comme déjà décrit précédemment, l'identifiant général de fidélité d'un utilisateur lui permet une gestion simplifiée de sa fidélité, quel que soit le programme de fidélité concerné, donc quel que soit le commerçant concerné. Cette gestion simplifiée consiste à utiliser cet identifiant général de fidélité, dans toutes les situations où l'utilisateur doit fournir une donnée permettant de l'identifier comme ayant adhéré à un programme de fidélité spécifique d'un commerçant.

Par exemple, si l'utilisateur souhaite bénéficier, lors d'un achat, des avantages du programme de fidélité auquel il a adhéré, chez un commerçant donné, il n'a qu'à fournir (selon différentes méthodes décrites plus en détail ci-après) son identifiant général de fidélité *ID_Gen_U1* au dispositif de transaction mettant en œuvre cet achat. Le dispositif de transaction ayant besoin d'un identifiant spécifique de fidélité d'un utilisateur (pour le commerçant en question) pour gérer un programme spécifique de fidélité, le dispositif de transaction doit obtenir l'identifiant spécifique de fidélité, à partir de l'identifiant général de fidélité fourni par l'utilisateur.

Pour ce faire, et comme illustré en **figure 2****,** le dispositif de transaction mettant en œuvre l'achat transmet l'identifiant général de fidélité fourni par l'utilisateur, dans une requête Req_A (*ID_Gen_U1, ID_A*), au serveur de gestion d'identifiants de fidélité, afin d'obtenir en retour, l'identifiant spécifique de fidélité de l'utilisateur pour le commerçant.

Lors d'une étape 13 de recherche, le serveur de gestion d'identifiants de fidélité recherche donc, dans sa base de données par exemple, si un identifiant spécifique de fidélité pour l'utilisateur et le commerçant donnés est associé à l'identifiant général de fidélité transmis par le dispositif de transaction. Pour ce faire, le serveur de gestion d'identifiants de fidélité a non seulement besoin de l'identifiant général de fidélité mais également d'une donnée lui permettant d'identifier le commerçant.

Selon une première variante, cette donnée d'identification du commerçant est obtenue via la requête émise par le dispositif de transaction, qui comprend par exemple un identifiant du commerçant *(ID_A),* comme illustré en **figures 1** et **2****.** La requête peut également comprendre un identifiant du dispositif de transaction, ou une clé publique du dispositif de transaction, permettant d'identifier le commerçant associé au dispositif de transaction de manière unique.

Selon une deuxième variante, le serveur de gestion d'identifiants de fidélité peut obtenir la donnée d'identification du commerçant par d'autres moyens que la requête elle-même, comme par exemple via une information de localisation du dispositif de transaction, obtenue en dehors de la requête, qui permet ensuite, via des moyens internes au serveur, d'identifier de manière unique le commerçant associé au dispositif de transaction.

Par ailleurs, le serveur de gestion d'identifiants de fidélité est à même de reconnaître un identifiant spécifique de fidélité à partir d'une donnée d'identification d'un commerçant, par exemple grâce à des moyens de conversion de la donnée d'identification d'un commerçant en un identifiant de fidélité présentant un format prédéterminé. Ainsi, l'étape 13 de recherche peut comprendre une sous-étape de conversion de la donnée d'identification d'un commerçant en un format apte à être comparé aux identifiants spécifiques de fidélité susceptibles d'être associés à l'identifiant général de fidélité de l'utilisateur.

Si un identifiant spécifique de fidélité pour l'utilisateur et le commerçant donnés est associé à l'identifiant général de fidélité de l'utilisateur, le serveur de gestion d'identifiants de fidélité répond à la requête du dispositif de transaction en lui transmettant l'identifiant spécifique de fidélité trouvé (par exemple *ID_A_U1*), comme illustré en **figures 1** et **2****.**

Si, en revanche, le serveur de gestion d'identifiants de fidélité n'a pas trouvé, lors de l'étape 13 de recherche, l'identifiant spécifique de fidélité pour l'utilisateur et le commerçant donnés, le serveur renvoie un réponse négative (par exemple « *KO* ») au dispositif de transaction.

Selon des variantes de réalisation, le serveur peut bien sûr indiquer la raison de l'échec dans sa réponse négative, afin que le dispositif de transaction puisse, le cas échéant, mettre en œuvre une action adéquate.

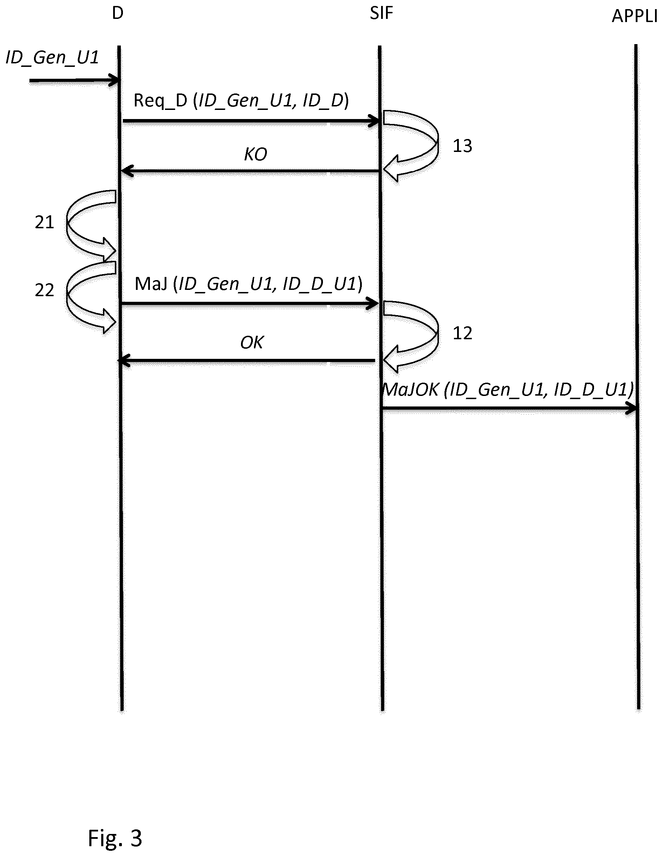

Par exemple, l'échec peut être dû au fait que cet identifiant spécifique de fidélité n'a pas été préalablement associé à l'identifiant général de fidélité de l'utilisateur (cas illustré par la **figure 3****,** décrite ci-après), ou au fait que l'identifiant général de fidélité de l'utilisateur n'existe pas, ou encore que le serveur de gestion d'identifiants de fidélité n'a pas réussi à identifier le commerçant.

Le serveur de gestion d'identifiants de fidélité permet donc, via les différents modes de réalisation du procédé de gestion d'identifiants de fidélité proposé, une gestion centralisée des différentes données d'identification d'un utilisateur, appelé identifiants spécifiques de fidélité, aux différents programmes de fidélité auxquels il a adhéré, grâce à un identifiant général de fidélité. La gestion de la fidélité est donc nettement simplifié pour l'utilisateur, qui n'a plus à rechercher de données spécifiques relatives à un programme de fidélité, lorsqu'il souhaite bénéficier des avantages liés à ce programme de fidélité, mais n'a qu'à fournir son identifiant général de fidélité.

### 5.3. Procédé de traitement de données de fidélité

Selon un deuxième aspect, la technique proposée se rapporte donc à un procédé de traitement de données de fidélité, mis en œuvre dans un dispositif de transaction d'un commerçant, par exemple au moment d'un achat, selon un mode de réalisation particulier.

Selon ce mode de réalisation, ce procédé permet à un utilisateur de bénéficier d'avantages liés à son adhésion à un programme de fidélité spécifique, pour un commerçant donné, sans avoir à fournir de données spécifiques à ce programme mais en utilisant un identifiant général de fidélité (préalablement généré et mis à jour selon le procédé de gestion d'identifiants de fidélité décrit précédemment).

De manière classique, le traitement de données de fidélité au sein d'un dispositif de transaction (par exemple un terminal de paiement électronique, ou une caisse enregistreuse), permet au commerçant de gérer de manière fiable et efficace les données impliquant les moyens de paiement des utilisateurs : le traitement de ces données doit être effectué de manière sécurisée afin qu'elles (les données) ne puissent pas faire l'objet d'un vol ou d'une usurpation. Ainsi, le dispositif de transaction d'un commerçant présente des caractéristiques qui sont utilisées pour effectuer un traitement fiable et sécurisé de ces données. Dans les faits, ce traitement des données de fidélité est réalisé le plus souvent postérieurement à la confirmation de la transaction, sur la base des données restant en possession du terminal (donc sur la base des données que le terminal a pris soin de conserver dans la mémoire sécurisée). De plus, le dispositif de transaction communique généralement avec un serveur spécifique de gestion de programmes de fidélité associé au commerçant.

Comme déjà décrit précédemment, le principe de l'utilisation d'un identifiant général de fidélité (qui permet à l'utilisateur de simplifier fortement la gestion de ses différents programmes de fidélité) repose sur la transmission, par le dispositif de transaction d'un commerçant, à un serveur de gestion d'identifiants de fidélité, de cet identifiant général de fidélité pour obtenir en retour l'identifiant spécifique de fidélité de l'utilisateur, pour le commerçant donné. Une fois obtenu cet identifiant spécifique de fidélité, le dispositif de transaction peut mettre en œuvre un traitement « classique » de cette donnée de fidélité, par exemple en communiquant avec un serveur local.

La première étape, illustrée par exemple en **figure 2****,** consiste donc, pour le dispositif de transaction d'un commerçant A, en l'obtention de cet identifiant général de fidélité *ID_GEN_U1* pour l'utilisateur *U1* effectuant un achat.

Cette étape d'obtention peut être mise en œuvre par exemple selon les différents moyens suivants :
- l'utilisateur fournit son identifiant général de fidélité au commerçant : l'utilisateur a par exemple affiché sur son smartphone son identifiant général de fidélité, via l'application de fidélité dédiée préalablement installée, et le commerçant, le saisit manuellement ou le scanne dans son dispositif de transaction. La saisie manuelle peut également être faite par l'utilisateur lui-même. L'identifiant général de fidélité peut également prendre la forme d'un code QR, affiché par exemple sur le smartphone de l'utilisateur et lu par le dispositif de transaction ;
- l'utilisateur présente son smartphone à proximité du dispositif de transaction et la transmission de son identifiant général de fidélité est mise en œuvre automatiquement, par exemple via l'application de fidélité dédiée préalablement installée sur son smartphone communiquant avec le dispositif de transaction par des moyens de communication sans contact (de type NFC) ou à très courte portée (Bluetooth) ;
- le dispositif de transaction obtient automatiquement l'identifiant général de fidélité via une technique d'émulation du champ magnétique généré par une carte à bande magnétique, permettant de transmettre, à un dispositif de transaction, en même temps que les informations relatives à la carte de paiement de l'utilisateur, des données dites secondaires destinées par exemple à confirmer, enrichir ou compléter l'opération de paiement effectuée (comme par exemple des données secondaires relatives à l'adhésion de l'utilisateur à un programme de fidélité de cette enseigne, et plus particulièrement son identifiant général de fidélité).

Ainsi, selon la variante de réalisation, la gestion de la fidélité peut être rendue entièrement automatique pour l'utilisateur, la rendant optimale et efficace, tant en terme d'ergonomie que de sécurisation, les échanges entre le terminal de communication de l'utilisateur et le dispositif de transaction pouvant être sécurisés (par des techniques connues en soi et non détaillées ici).

Une fois obtenu cet identifiant général de fidélité, le dispositif de transaction émet donc, dans une deuxième étape, une requête à destination du serveur de gestion d'identifiants de fidélité dans le but d'obtenir l'identifiant spécifique lui permettant de gérer la fidélité de l'utilisateur pour le commerçant concerné. Par exemple, comme illustré en **figure 2** et déjà décrit précédemment, la requête Req_A (*ID_Gen_U1, ID_A*) comprend également un identifiant du commerçant (sous la forme d'un identifiant du dispositif de transaction lui-même, d'une clé publique de ce dispositif de transaction, ou encore d'un identifiant standardisé du commerçant ....).

En retour, le dispositif de transaction reçoit l'identifiant spécifique de fidélité requis et le traite, dans une troisième étape 22 de traitement qui peut comprendre les sous-étapes suivantes :
- une étape de transmission de l'identifiant spécifique de fidélité de l'utilisateur pour le commerçant à un serveur spécifique de gestion de programmes de fidélité associé au commerçant, par exemple un serveur local destiné à gérer les programmes de fidélité du commerçant pour tous ses clients/utilisateurs ;
- une étape de gestion de la réponse du serveur spécifique, pouvant prendre par exemple les formes suivantes classiques : impression sur le ticket de caisse de la prise en compte de la fidélité, affichage sur l'écran du dispositif de transaction de la prise en compte de la fidélité, impression d'un coupon de réduction, envoi par SMS (ou email ou autre) de coupon de réduction ou d'offres promotionnelles ....

Ainsi, à partir d'un identifiant général de fidélité fourni par un utilisateur, le dispositif de transaction peut mettre en œuvre un procédé de gestion de données de fidélité permettant à l'utilisateur de pouvoir bénéficier des avantages offerts par son adhésion au programme de fidélité du commerçant.

Il se peut cependant que la requête transmise par le dispositif de transaction au serveur de gestion d'identifiants de fidélité échoue, pour différentes raisons décrites ci-dessus.

Le deuxième mode de réalisation, illustré en **figure 3****,** correspond par exemple à une de ces situations, dans laquelle un identifiant spécifique de fidélité, pour un commerçant D, n'a pas été préalablement associé à l'identifiant général de fidélité de l'utilisateur. Ainsi, lorsque le dispositif de transaction du commerçant D, au moment d'un achat effectué par l'utilisateur *U1,* émet une requête Req_D (*ID_Gen_U1, ID_D*) en vue d'obtenir un identifiant spécifique de fidélité, il reçoit une réponse négative du serveur de gestion d'identifiants de fidélité, indiquant la raison de l'échec.

Le procédé proposé permet de remédier à cette situation en proposant une mise à jour de l'identifiant général de fidélité de l'utilisateur, à l'initiative du dispositif de transaction (et non plus, comme dans le cas le plus fréquent décrit précédemment en relation avec la **figure 2****,** à l'initiative d'un terminal de communication de l'utilisateur, via une application par exemple).

Pour ce faire, le dispositif de transaction obtient, lors d'une étape 21, un identifiant spécifique de fidélité pour l'utilisateur. Par exemple, cette obtention est mise en œuvre via le serveur spécifique de gestion de programmes de fidélité associé au commerçant, lequel est à même de créer un identifiant spécifique pour un nouvel adhérent (i.e. l'utilisateur).

Cet identifiant spécifique de fidélité obtenu est ensuite transmis au serveur de gestion d'identifiants de fidélité, par le dispositif de transaction, avec l'identifiant général de fidélité de l'utilisateur. Par exemple, cette transmission est effectuée par l'émission d'une requête de mise à jour MaJ (*ID_Gen_U1, ID_D_U1*), telle que décrite précédemment en relation avec le premier mode de réalisation.

Une étape 12 de mise à jour est alors mise en œuvre dans le serveur de gestion d'identifiants de fidélité, comme déjà décrit en relation avec le premier mode de réalisation, à la différence près que la mise à jour n'est pas initiée par un terminal de communication de l'utilisateur mais par un dispositif de transaction d'un commerçant. En revanche, pour le serveur de gestion d'identifiants de fidélité, la mise en œuvre est identique pour cette mise à jour, c'est-à-dire qu'il associe un identifiant spécifique de fidélité supplémentaire à l'identifiant général de fidélité (lequel est maintenant associé à quatre identifiants spécifiques de fidélité respectivement pour les commerçants A, B, C et D).

Enfin, après cette étape de mise à jour, le serveur de gestion d'identifiants de fidélité communique avec le terminal de communication de l'utilisateur, par exemple via l'application *APPLI* dédiée, pour lui confirmer la mise à jour de l'identifiant général de fidélité de l'utilisateur. De cette manière, même si l'application n'est pas à l'initiative de cette mise à jour, elle en a connaissance afin de pouvoir elle-même offrir à l'utilisateur une vision à jour de sa fidélité.

Il est à noter que cette mise à jour de l'identifiant général de fidélité de l'utilisateur, à l'initiative du dispositif de transaction d'un commerçant, nécessite au préalable l'autorisation de l'utilisateur, dans la mesure où cet identifiant général de fidélité est une donnée personnelle dont il doit pouvoir maitriser l'utilisation et la mise à jour.

Selon une première variante, l'autorisation de l'utilisateur est requise au moment de la mise à jour, ou juste avant, lorsque le dispositif de transaction a reçu une réponse négative du serveur de gestion d'identifiants de fidélité. Par exemple, une confirmation de la mise à jour peut être demandée à l'utilisateur, via une saisie sur le clavier du dispositif de transaction (par exemple un appui sur la touche OK en réponse à une question), ou encore oralement via le commerçant qui confirmera ensuite l'accord de l'utilisateur sur son dispositif de transaction. Selon un autre exemple, le dispositif de transaction communique avec le terminal de communication de l'utilisateur (par un des moyens déjà décrits ci-dessus), par exemple via l'application dédiée à la fidélité, et c'est cette application qui requiert une autorisation de l'utilisateur (via un écran spécifique affiché sur le terminal de communication par exemple). Une fois l'autorisation confirmée par l'utilisateur sur son terminal de communication, celle-ci est transmise au dispositif de transaction afin qu'il transmette sa requête de mise à jour au serveur de gestion d'identifiants de fidélité. Ces moyens de communication entre le dispositif de transaction et le terminal de communication de l'utilisateur sont par exemple ceux décrits ci-dessus en relation avec l'obtention, par le dispositif de transaction, de l'identifiant général de fidélité de l'utilisateur, ou tout autre moyen de communication permettant une transmission sécurisée.

Selon une deuxième variante, l'utilisateur a préalablement donné une autorisation générale pour la mise à jour de son identifiant général de fidélité, par exemple en configurant son profil de fidélité, via l'application dédiée installée sur son terminal de communication. L'utilisateur peut ainsi confirmer que toute mise à jour de son identifiant général de fidélité peut être effectuée, que ce soit à l'initiative de son application de fidélité ou d'un dispositif de transaction d'un commerçant, sous réserve que ce dernier soit authentifié, par exemple grâce à une clé publique ou un identifiant unique (selon des protocoles connus en soi). Selon cette deuxième variante, cette autorisation générale de mise à jour peut être par exemple un attribut de l'identifiant général de fidélité, cet attribut étant créé en même temps que l'identifiant ou bien ajouté ultérieurement lorsque l'utilisateur le souhaite. Cet attribut peut être compris, ou reconnu, ou décodé, par le dispositif de transaction, à partir de l'identifiant général de fidélité lui-même. De cette manière, le dispositif de transaction sait qu'il n'a pas à demander une autorisation à l'utilisateur et peut donc transmettre directement sa requête de mise à jour au serveur de gestion d'identifiants de fidélité.

En parallèle, le dispositif de transaction peut mettre en œuvre une étape de traitement 22 (déjà décrite ci-dessus et non détaillée à nouveau ici) de l'identifiant spécifique de fidélité obtenu, afin de faire bénéficier l'utilisateur des avantages liés à son adhésion au programme de fidélité du commerçant.

Ainsi, selon ce deuxième mode de réalisation, le dispositif de transaction peut mettre en œuvre, à partir d'un identifiant général de fidélité fourni par un utilisateur, un procédé de gestion de données de fidélité permettant à l'utilisateur de pouvoir bénéficier des avantages offerts par son adhésion au programme de fidélité du commerçant, même si cette adhésion a lieu au moment de la transaction. Une adhésion à un programme de fidélité par un utilisateur peut donc être prise en compte de manière simple et instantanée, au moment d'un achat.

### 5.4. Application de fidélité

Comme déjà décrit ci-dessus en relation avec les deux modes de réalisation de la technique proposée, l'utilisateur peut installer une application dédiée à la gestion de ses programmes de fidélité, sur son terminal de communication.

Un tel terminal de communication peut par exemple être un terminal de communication de type smartphone ou tablette, un dispositif électronique dédié autonome, ou encore un dispositif électronique destiné à être couplé à un terminal de communication (le dispositif électronique peut alors par exemple être intégré à une coque de protection du terminal de communication).

Une telle application peut notamment être une application de type portefeuille électronique (également appelée « *wallet »* en anglais), qui permet notamment de stocker des informations associées à plusieurs cartes ainsi que des informations complémentaires.

Via cette application, l'utilisateur a notamment la possibilité de choisir les informations de paiement à utiliser pour une opération de paiement, au cas par cas. Il a aussi la possibilité de configurer des informations de paiement dites « par défaut », qui seront les données utilisées par défaut dans le cadre d'une opération de paiement (à défaut d'un choix particulier autre effectué par l'utilisateur).

Via cette application, l'utilisateur peut donc également, selon la technique proposée et déjà décrite précédemment, créer un identifiant général de fidélité, sur la base duquel un serveur de gestion d'identifiants de fidélité est à même de retrouver un identifiant spécifique de fidélité de l'utilisateur à utiliser dans le cadre d'une opération de paiement donnée.

L'utilisateur peut également mettre à jour cet identifiant général de fidélité, via cette application dédiée, lorsqu'il souhaite par exemple ajouter un nouveau programme de fidélité spécifique, comme par exemple une nouvelle carte de fidélité physique, dont il peut scanner le code barre pour l'intégrer à la gestion centralisée de sa fidélité vis l'application, ou encore un identifiant spécifique de fidélité obtenu suite une adhésion à un programme de fidélité d'un commerçant.

Cette application permet également à l'utilisateur de se créer et de mettre à jour un profil de fidélité, par exemple pour confirmer une autorisation générale de mise telle que décrite ci-dessus en relation avec le deuxième mode de réalisation.

### 5.5. Autres caractéristiques et avantages

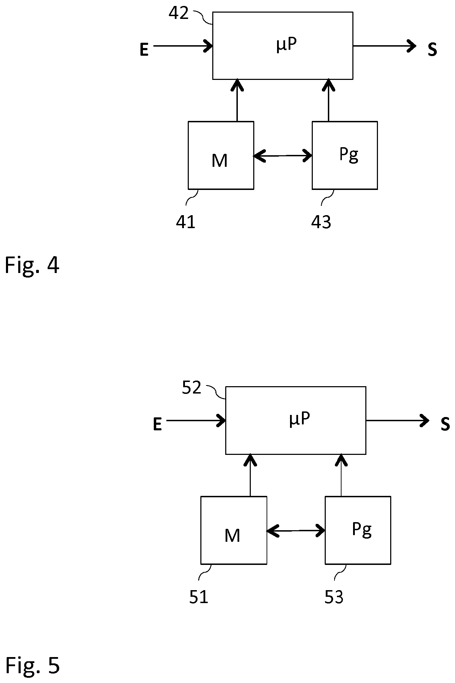

On décrit, en relation avec la **figure 4****,** un serveur de gestion d'identifiants de fidélité comprenant des moyens permettant l'exécution d'un procédé de gestion d'identifiants de fidélité, décrit précédemment en relation avec des modes de réalisation particuliers.

Par exemple, le serveur de gestion d'identifiants de fidélité comprend une mémoire 41 constituée d'une mémoire tampon, une unité de traitement 42, équipée par exemple d'un microprocesseur, et pilotée par le programme d'ordinateur 43, mettant en œuvre notamment un procédé de gestion d'identifiants de fidélité. À l'initialisation, les instructions de code du programme d'ordinateur 43 sont par exemple chargées dans une mémoire avant d'être exécutées par le processeur de l'unité de traitement 42. L'unité de traitement 42 reçoit par exemple en entrée E au moins une requête de génération d'un identifiant général de fidélité pour un utilisateur préalablement identifié. Le microprocesseur de l'unité de traitement 42 met alors en œuvre les étapes du procédé de gestion d'identifiants de fidélité, selon les instructions du programme d'ordinateur 43 de manière à générer en sortie S un identifiant général de fidélité pour l'utilisateur en question.

Pour cela, le serveur de gestion d'identifiants de fidélité comprend, outre la mémoire tampon 41, des moyens, par exemple sous la forme d'un ou plusieurs modules, de génération d'un identifiant général de fidélité pour un utilisateur préalablement identifié.

L'ensemble de ces moyens/modules peut se présenter sous la forme d'un processeur particulier implémenté au sein du serveur de gestion d'identifiants de fidélité, ledit processeur étant un processeur sécurisé, apte à traiter des données de nature confidentielle, comme des données de moyen de paiement ou des jetons d'authentification bancaire.

La technique proposée se rapporte également à un dispositif de transaction permettant l'exécution d'un procédé de traitement de données de fidélité décrit précédemment, selon des modes de réalisation particuliers. Un tel dispositif de transaction est notamment décrit en relation avec la **figure 5** dans un mode de réalisation particulier, et il comprend les moyens suivants, par exemple sous la forme de modules :
- des moyens d'obtention, en provenance d'un utilisateur, d'un identifiant général de fidélité de l'utilisateur ;
- des moyens d'émission, à destination d'un serveur de gestion d'identifiants de fidélité, d'une requête d'obtention d'un identifiant spécifique de fidélité de l'utilisateur pour le commerçant, la requête d'obtention comprenant au moins l'identifiant général de fidélité de l'utilisateur ;
- des moyens de réception, en provenance du serveur de gestion d'identifiants de fidélité, d'une réponse à la requête d'obtention et, si ladite réponse comprend l'identifiant spécifique de fidélité de l'utilisateur pour le commerçant :
- des moyens de traitement d'au moins une donnée de fidélité associée à l'identifiant spécifique de fidélité de l'utilisateur pour le commerçant.

Par exemple, le dispositif de transaction comprend une mémoire 51 constituée d'une mémoire tampon, une unité de traitement 52, équipée par exemple d'un microprocesseur, et pilotée par le programme d'ordinateur 53, mettant en œuvre notamment un procédé de traitement de données de fidélité. À l'initialisation, les instructions de code du programme d'ordinateur 53 sont par exemple chargées dans une mémoire avant d'être exécutées par le processeur de l'unité de traitement 52. L'unité de traitement 52 reçoit par exemple en entrée E un identifiant général de fidélité de l'utilisateur. Le microprocesseur de l'unité de traitement 52 met alors en œuvre les étapes du procédé de traitement de données de fidélité, selon les instructions du programme d'ordinateur 53, de manière à générer en sortie S des avantages de fidélité pour l'utilisateur en question.

Pour cela, le dispositif de transaction comprend, outre la mémoire tampon 51, des moyens des moyens de transmission/réception de données qui peuvent se matérialiser sous la forme d'une interface de connexion à un ou plusieurs réseaux de communication, ces moyens permettant éventuellement d'établir une liaison avec des serveurs partenaires pour la gestion de programmes de fidélité. Le terminal de paiement comprend également éventuellement des moyens de calculs cryptographiques, lui permettant de vérifier l'authenticité de données reçues sur la base d'une comparaison du résultat d'un calcul cryptographique avec un jeton d'authentification.

Les modes de réalisation précédemment décrits dans le cadre de la présente invention sont combinables entre eux. Ils sont donnés à titre d'exemples illustratifs et non limitatifs, afin d'illustrer au mieux le principe général de l'invention. D'autres modes de réalisation peuvent bien entendus être mis en œuvre dans le cadre de la présente invention.

## Revendications

1. Procédé de gestion d'identifiants de fidélité, procédé mis en œuvre dans un serveur de gestion d'identifiants de fidélité (S*IF)* et comprenant une **phase d'initialisation** comprenant une étape (11) de génération d'un unique identifiant général de fidélité (*ID_Gen_U1)* pour un utilisateur préalablement identifié *(U1),* ledit identifiant général de fidélité (*ID_Gen_U1*) étant associé à une pluralité de programmes spécifiques de fidélité dudit utilisateur *(U1)* et les étapes suivantes :
▪ réception, en provenance d'un dispositif de transaction associé à un commerçant, d'une requête d'obtention d'un identifiant spécifique de fidélité dudit utilisateur pour ledit commerçant, ladite requête d'obtention comprenant ledit identifiant général de fidélité dudit utilisateur ;
▪ obtention d'au moins une donnée d'identification dudit commerçant, ladite donnée d'identification étant une information de localisation dudit dispositif de transaction ;
▪ recherche (13), à partir de ladite donnée d'identification dudit commerçant et dudit identifiant général de fidélité dudit utilisateur, dudit identifiant spécifique de fidélité dudit utilisateur pour ledit commerçant :
∘ lorsque ladite recherche est positive, transmission, à destination dudit dispositif de transaction, d'une réponse comprenant ledit identifiant spécifique de fidélité dudit utilisateur pour ledit commerçant ;
∘ lorsque ladite recherche est négative, transmission, à destination dudit dispositif de transaction, d'une réponse négative.

2. Procédé de gestion d'identifiants de fidélité selon la revendication 1, **caractérisé en ce que** ladite phase d'initialisation comprend également les étapes suivantes, respectivement avant et après ladite étape de génération :
• réception, en provenance d'un terminal de communication dudit utilisateur, d'une requête de génération d'un identifiant général de fidélité associé audit utilisateur, ladite requête de génération comprenant au moins une donnée d'identification dudit utilisateur ;
• transmission, à destination dudit terminal de communication dudit utilisateur, d'une réponse comprenant ledit identifiant général de fidélité généré.

3. Procédé de gestion d'identifiants de fidélité selon la revendication 1, **caractérisé en ce qu'**il comprend en outre une étape de transmission, à destination dudit terminal de communication dudit utilisateur, d'une information représentative dudit identifiant général de fidélité mis à jour.

4. Procédé de gestion d'identifiants de fidélité selon l'une quelconque des revendications 1 à 3, **caractérisé en ce qu'**il comprend en outre les étapes suivantes :
▪ obtention d'une autorisation dudit utilisateur pour la mise à jour dudit identifiant général de fidélité ;
réception, en provenance d'un dispositif de transaction d'un commerçant, d'une requête de mise à jour dudit identifiant général de fidélité dudit utilisateur, ladite requête de mise à jour comprenant ledit identifiant général de fidélité dudit utilisateur et au moins un identifiant spécifique de fidélité dudit utilisateur pour ledit commerçant ;
▪ mise à jour (12) dudit identifiant général de fidélité par association entre ledit au moins un identifiant spécifique de fidélité dudit utilisateur pour ledit commerçant et ledit identifiant général de fidélité dudit utilisateur.

5. Procédé de traitement de données de fidélité, procédé mis en œuvre dans un dispositif de transaction d'un commerçant et comprenant les étapes suivantes :
▪ obtention, en provenance d'un utilisateur, d'un identifiant général de fidélité dudit utilisateur, ledit identifiant général de fidélité étant associé à une pluralité de programmes spécifiques de fidélité dudit utilisateur ;
▪ émission, à destination d'un serveur de gestion d'identifiants de fidélité, d'une requête d'obtention d'un identifiant spécifique de fidélité dudit utilisateur pour ledit commerçant, ladite requête d'obtention comprenant au moins ledit identifiant général de fidélité dudit utilisateur et au moins une donnée d'identification dudit commerçant, ladite donnée d'identification étant une information de localisation dudit dispositif de transaction ;
• réception, en provenance dudit serveur de gestion d'identifiants de fidélité, d'une réponse à ladite requête d'obtention et, si ladite réponse comprend ledit identifiant spécifique de fidélité dudit utilisateur pour ledit commerçant :
▪ traitement (22) d'au moins une donnée de fidélité associée audit identifiant spécifique de fidélité dudit utilisateur pour ledit commerçant.

6. Procédé de traitement de données de fidélité selon la revendication 5, **caractérisé en ce qu'**il comprend les étapes suivantes, si ladite réponse est négative :
• obtention d'une autorisation générale prédéterminée dudit utilisateur pour la mise à jour dudit identifiant général de fidélité ;
▪ obtention (21) d'un identifiant spécifique de fidélité dudit utilisateur pour ledit commerçant ;
▪ émission, à destination dudit serveur de gestion d'identifiants de fidélité, d'une requête de mise à jour dudit identifiant de fidélité dudit utilisateur, ladite requête de mise à jour comprenant ledit identifiant général de fidélité dudit utilisateur et ledit identifiant spécifique de fidélité dudit utilisateur pour ledit commerçant ;
▪ traitement (22) d'au moins une donnée de fidélité associée audit identifiant spécifique de fidélité dudit utilisateur pour ledit commerçant.

7. Procédé de traitement de données de fidélité selon l'une quelconque des revendications 5 et 6, **caractérisé en ce que** lesdites étapes d'obtention d'un identifiant spécifique de fidélité dudit utilisateur pour ledit commerçant et de traitement sont mises en œuvre via un serveur spécifique de gestion de programmes de fidélité associé audit commerçant.

8. Procédé de traitement de données de fidélité selon la revendication 6, **caractérisé en ce que** ladite étape d'obtention d'un identifiant général de fidélité dudit utilisateur est mise en œuvre via des moyens de communication avec un terminal de communication dudit utilisateur appartenant au groupe comprenant :
▪ NFC ;
▪ Bluetooth ;
▪ MST (émulation de bande magnétique).

9. Serveur de gestion d'identifiants de fidélité comprenant des moyens de génération d'un identifiant général de fidélité (*ID_Gen_U1*) pour un utilisateur préalablement identifié *(U1),* ledit identifiant général de fidélité (*ID_Gen_U1*) étant associé à une pluralité de programmes spécifiques de fidélité dudit utilisateur *(U1),* et les moyens suivants :
▪ des moyens de réception, en provenance d'un dispositif de transaction associé à un commerçant, d'une requête d'obtention d'un identifiant spécifique de fidélité dudit utilisateur pour ledit commerçant, ladite requête d'obtention comprenant ledit identifiant général de fidélité dudit utilisateur ;
▪ des moyens d'obtention d'au moins une donnée d'identification dudit commerçant, ladite donnée d'identification étant une information de localisation dudit dispositif de transaction ;
▪ des moyens de recherche (13), à partir de ladite donnée d'identification dudit commerçant et dudit identifiant général de fidélité dudit utilisateur, dudit identifiant spécifique de fidélité dudit utilisateur pour ledit commerçant :
∘ lorsque ladite recherche est positive, transmission, à destination dudit dispositif de transaction, d'une réponse comprenant ledit identifiant spécifique de fidélité dudit utilisateur pour ledit commerçant ;
∘ lorsque ladite recherche est négative, transmission, à destination dudit dispositif de transaction, d'une réponse négative.

10. Dispositif de transaction comprenant :
▪ des moyens d'obtention, en provenance d'un utilisateur, d'un identifiant général de fidélité dudit utilisateur, ledit identifiant général de fidélité étant associé à une pluralité de programmes spécifiques de fidélité dudit utilisateur ;
▪ des moyens d'émission, à destination d'un serveur de gestion d'identifiants de fidélité, d'une requête d'obtention d'un identifiant spécifique de fidélité dudit utilisateur pour ledit commerçant, ladite requête d'obtention comprenant au moins ledit identifiant général de fidélité dudit utilisateur et au moins une donnée d'identification dudit commerçant, ladite donnée d'identification étant une information de localisation dudit dispositif de transaction ;
▪ des moyens de réception, en provenance dudit serveur de gestion d'identifiants de fidélité, d'une réponse à ladite requête d'obtention, et si ladite réponse comprend ledit identifiant spécifique de fidélité dudit utilisateur pour ledit commerçant :
▪ des moyens de traitement d'au moins une donnée de fidélité associée audit identifiant spécifique de fidélité dudit utilisateur pour ledit commerçant.

11. Produit programme d'ordinateur téléchargeable depuis un réseau de communication et/ou stocké sur un support lisible par ordinateur et exécutable par un microprocesseur,
**caractérisé en ce qu'**il comprend des instructions de code de programme pour l'exécution d'un procédé selon l'une quelconque des revendications 1 à 4, lorsqu'il est exécuté sur un ordinateur.

12. Produit programme d'ordinateur téléchargeable depuis un réseau de communication et/ou stocké sur un support lisible par ordinateur et exécutable par un microprocesseur,
**caractérisé en ce qu'**il comprend des instructions de code de programme pour l'exécution d'un procédé selon l'une quelconque des revendications 5 à 8, lorsqu'il est exécuté sur un ordinateur.

## Patentansprüche

1. Verfahren zur Verwaltung von Kundenbindungsidentifikatoren, wobei das Verfahren in einem Server zur Verwaltung von Kundenbindungsidentifikatoren *(SIF)* durchgeführt wird und eine Initialisierungsphase umfasst, die einen Schritt (11) des Generierens eines eindeutigen allgemeinen Kundenbindungsidentifikators (*ID_Gen_U1*) für einen zuvor identifizierten Nutzer *(U1)* umfasst, wobei der allgemeine Kundenbindungsidentifikator (*ID_Gen_U1*) mehreren spezifischen Kundenbindungsprogrammen des Nutzers *(U1)* zugeordnet ist, und die folgenden Schritte umfasst:
▪ Empfangen, von einer Transaktionsvorrichtung, die einem Händler zugeordnet ist, einer Anforderung zum Erhalten eines spezifischen Kundenbindungsidentifikators des Nutzers für den Händler, wobei die Erhaltungsanforderung den allgemeinen Kundenbindungsidentifikator des Nutzers umfasst;
▪ Erhalten mindestens eines Identifikationsdatenelements des Händlers, wobei das Identifikationsdatenelement eine Information zur Lokalisierung der Transaktionsvorrichtung ist;
▪ Ermitteln (13), anhand des Identifikationsdatenelements des Händlers und des allgemeinen Kundenbindungsidentifikators des Nutzers, des spezifischen Kundenbindungsidentifikators des Nutzers für den Händler:
∘ wenn die Ermittlung positiv ist, Übermitteln, an die Transaktionsvorrichtung, einer Antwort, die den spezifischen Kundenbindungsidentifikator des Nutzers für den Händler enthält;
∘ wenn die Ermittlung negativ ist, Übermitteln, an die Transaktionsvorrichtung, einer negativen Antwort.

2. Verfahren zur Verwaltung von Kundenbindungsidentifikatoren nach Anspruch 1, **dadurch gekennzeichnet, dass** die Initialisierungsphase auch die folgenden Schritte, vor bzw. nach dem Generierungsschritt, umfasst:
• Empfangen, von einem Kommunikationsendgerät des Nutzers, einer Anforderung zum Generieren eines allgemeinen Kundenbindungsidentifikators, der dem Nutzer zugeordnet ist, wobei die Generierungsanforderung mindestens ein Identifikationsdatenelement des Nutzers umfasst;
• Übermitteln, an das Kommunikationsendgerät des Nutzers, einer Antwort, die den generierten allgemeinen Kundenbindungsidentifikator enthält.

3. Verfahren zur Verwaltung von Kundenbindungsidentifikatoren nach Anspruch 1, **dadurch gekennzeichnet, dass** es ferner einen Schritt des Übermittelns, an das Kommunikationsendgerät des Nutzers, einer Information zur Darstellung des aktualisierten allgemeinen Kundenbindungsidentifikators umfasst.

4. Verfahren zur Verwaltung von Kundenbindungsidentifikatoren nach einem der Ansprüche 1 bis 3, **dadurch gekennzeichnet, dass** es ferner die folgenden Schritte umfasst:
▪ Erhalten einer Autorisierung des Nutzers zur Aktualisierung des allgemeinen Kundenbindungsidentifikators;
▪ Empfangen, von einer Transaktionsvorrichtung eines Händlers, einer Anforderung zur Aktualisierung des allgemeinen Kundenbindungsidentifikators des Nutzers, wobei die Aktualisierungsanforderung den allgemeinen Kundenbindungsidentifikator des Nutzers und mindestens einen spezifischen Kundenbindungsidentifikator des Nutzers für den Händler umfasst;
▪ Aktualisieren (12) des allgemeinen Kundenbindungsidentifikators durch Zuordnung zwischen dem mindestens einen spezifischen Kundenbindungsidentifikator des Nutzers für den Händler und dem allgemeinen Kundenbindungsidentifikator des Nutzers.

5. Verfahren zur Verarbeitung von Kundenbindungsdaten, wobei das Verfahren in einer Transaktionsvorrichtung eines Händlers durchgeführt wird und die folgenden Schritte umfasst:
▪ Erhalten, von einem Nutzer, eines allgemeinen Kundenbindungsidentifikators des Nutzers, wobei der allgemeine Kundenbindungsidentifikator mehreren spezifischen Kundenbindungsprogrammen des Nutzers zugeordnet ist;
▪Senden, an einen Server zur Verwaltung von Kundenbindungsidentifikatoren, einer Anforderung zum Erhalten eines spezifischen Kundenbindungsidentifikators des Nutzers für den Händler, wobei die Erhaltungsanforderung mindestens den allgemeinen Kundenbindungsidentifikator des Nutzers und mindestens ein Identifikationsdatenelement des Händlers umfasst, wobei das Identifikationsdatenelement eine Information zur Lokalisierung der Transaktionsvorrichtung ist;
▪ Empfangen, von dem Server zur Verwaltung von Kundenbindungsidentifikatoren, einer Antwort auf die Erhaltungsanforderung und, wenn die Antwort den spezifischen Kundenbindungsidentifikator des Nutzers für den Händler enthält:
▪ Verarbeiten (22) mindestens eines Kundenbindungsdatenelements, das dem spezifischen Kundenbindungsidentifikator des Nutzers für den Händler zugeordnet ist.

6. Verfahren zur Verarbeitung von Kundenbindungsdaten nach Anspruch 5, **dadurch gekennzeichnet, dass** es die folgenden Schritte umfasst: wenn die Antwort negativ ist:
▪ Erhalten einer vorher festgelegten allgemeinen Autorisierung des Nutzers zur Aktualisierung des allgemeinen Kundenbindungsidentifikators;
▪ Erhalten (21) eines spezifischen Kundenbindungsidentifikators des Nutzers für den Händler;
▪ Senden, an den Server zur Verwaltung von Kundenbindungsidentifikatoren, einer Anforderung zum Aktualisieren des Kundenbindungsidentifikators des Nutzers, wobei die Aktualisierungsanforderung den allgemeinen Kundenbindungsidentifikator des Nutzers und den spezifischen Kundenbindungsidentifikator des Nutzers für den Händler umfasst;
▪ Verarbeiten (22) mindestens eines Kundenbindungsdatenelements, das dem spezifischen Kundenbindungsidentifikator des Nutzers für den Händler zugeordnet ist.

7. Verfahren zur Verarbeitung von Kundenbindungsdaten nach einem der Ansprüche 5 und 6, **dadurch gekennzeichnet, dass** die Schritte des Erhaltens eines spezifischen Kundenbindungsidentifikators des Nutzers für den Händler und des Verarbeitens über einen spezifischen Server zur Verwaltung von Kundenbindungsprogrammen durchgeführt werden, der dem Händler zugeordnet ist.

8. Verfahren zur Verarbeitung von Kundenbindungsdaten nach Anspruch 6, **dadurch gekennzeichnet**, der Schritt des Erhaltens eines allgemeinen Kundenbindungsidentifikators des Nutzers über Mittel zur Kommunikation mit einem Kommunikationsendgerät des Nutzers durchgeführt, das der Gruppe angehört, umfassend:
▪ NFC;
▪ Bluetooth;
▪ MST (Magnetband-Emulation).

9. Server zur Verwaltung von Kundenbindungsidentifikatoren, umfassend Mittel zum Generieren eines allgemeinen Kundenbindungsidentifikators (*ID_Gen_U1*) für einen zuvor identifizierten Nutzer *(U1),* wobei der allgemeine Kundenbindungsidentifikator (*ID_Gen_U1*) mehreren spezifischen Kundenbindungsprogrammen des Nutzers (U1) zugeordnet ist, und die folgenden Mittel:
▪ Mittel zum Empfangen, von einer Transaktionsvorrichtung, die einem Händler zugeordnet ist, einer Anforderung zum Erhalten eines spezifischen Kundenbindungsidentifikators des Nutzers für den Händler, wobei die Erhaltungsanforderung den allgemeinen Kundenbindungsidentifikator des Nutzers umfasst;
▪ Mittel zum Erhalten mindestens eines Identifikationsdatenelements des Händlers, wobei das Identifikationsdatenelement eine Information zur Lokalisierung der Transaktionsvorrichtung ist;
▪ Mittel zum Ermitteln (13), anhand des Identifikationsdatenelements des Händlers und des allgemeinen Kundenbindungsidentifikators des Nutzers, des spezifischen Kundenbindungsidentifikators des Nutzers für den Händler:
∘ wenn die Ermittlung positiv ist, Übermitteln, an die Transaktionsvorrichtung, einer Antwort, die den spezifischen Kundenbindungsidentifikator des Nutzers für den Händler enthält;
∘ wenn die Ermittlung negativ ist, Übermitteln, an die Transaktionsvorrichtung, einer negativen Antwort.

10. Transaktionsvorrichtung, umfassend:
▪ Mittel zum Erhalten, von einem Nutzer, eines allgemeinen Kundenbindungsidentifikators des Nutzers, wobei der allgemeine Kundenbindungsidentifikator mehreren spezifischen Kundenbindungsprogrammen des Nutzers zugeordnet ist;
▪ Mittel zum Senden, an einen Server zur Verwaltung von Kundenbindungsidentifikatoren, einer Anforderung zum Erhalten eines spezifischen Kundenbindungsidentifikators des Nutzers für den Händler, wobei die Erhaltungsanforderung mindestens den allgemeinen Kundenbindungsidentifikator des Nutzers und mindestens ein Identifikationsdatenelement des Händlers umfasst, wobei das Identifikationsdatenelement eine Information zur Lokalisierung der Transaktionsvorrichtung ist;
▪ Mittel zum Empfangen, von dem Server zur Verwaltung von Kundenbindungsidentifikatoren, einer Antwort auf die Erhaltungsanforderung und, wenn die Antwort den spezifischen Kundenbindungsidentifikator des Nutzers für den Händler enthält:
▪ Mittel zum Verarbeiten mindestens eines Kundenbindungsdatenelements, das dem spezifischen Kundenbindungsidentifikator des Nutzers für den Händler zugeordnet ist.

11. Computerprogramm, das aus einem Kommunikationsnetz heruntergeladen werden kann und/oder auf einem computerlesbaren Träger gespeichert und von einem Mikroprozessor ausführbar ist,
**dadurch gekennzeichnet, dass** es Programmcode-Anweisungen für die Durchführung eines Verfahrens nach einem der Ansprüche 1 bis 4 umfasst, wenn es auf einem Computer ausgeführt wird.

12. Computerprogramm, das aus einem Kommunikationsnetz heruntergeladen werden kann und/oder auf einem computerlesbaren Träger gespeichert und von einem Mikroprozessor ausführbar ist,
**dadurch gekennzeichnet, dass** es Programmcode-Anweisungen für die Durchführung eines Verfahrens nach einem der Ansprüche 5 bis 8 umfasst, wenn es auf einem Computer ausgeführt wird.

## Claims

1. A method for managing loyalty identifiers, implemented in a loyalty identifier management server (SIF) and comprising an initialisation phase including a step (11) of generating a unique general loyalty identifier (ID_Gen_U1) for a previously identified user (UI, said general loyalty identifier (ID_Gen_U1) being associated with a plurality of specific loyalty programmes of said user (UI and the following steps:
• receiving, from a transaction device associated with a merchant, a request to obtain a specific loyalty identifier for said user for said merchant, said request to obtain comprising said general loyalty identifier of said user;
• obtaining at least one piece of identification data for said merchant, said identification data being location information for said transaction device;
• searching (13), based on said merchant identification data and said user's general loyalty identifier, for said user's specific loyalty identifier for said merchant:
∘ if the search is successful, transmitting, to said transaction device, a response comprising said user's specific loyalty identifier for said merchant;
∘ if said search is unsuccessful, transmitting a negative response to said transaction device.

2. A method for managing loyalty identifiers according to claim 1, **characterised in that** said initialisation phase also comprises the following steps, respectively before and after said generation step:
• receiving, from a communication terminal of said user, a request to generate a general loyalty identifier associated with said user, said generation request comprising at least one piece of identification data relating to said user;
• transmitting, to said user's communication terminal, a response comprising said generated general loyalty identifier.

3. A method for managing loyalty identifiers according to claim 1, **characterised in that** it further comprises a step of transmitting, to said user's communication terminal, information representing said updated general loyalty identifier.

4. A method for managing loyalty identifiers according to any one of claims 1 to 3, **characterised in that** it further comprises the following steps:
• obtaining authorisation from said user to update said general loyalty identifier;
• receiving, from a merchant's transaction device, a request to update said user's general loyalty identifier, said update request comprising said user's general loyalty identifier and at least one specific loyalty identifier of said user for said merchant;
• updating (12) said general loyalty identifier by associating said at least one specific loyalty identifier of said user for said merchant with said general loyalty identifier of said user.

5. A method for processing loyalty data, the method being implemented in a merchant's transaction device, comprising the following steps:
• obtaining, from a user, a general loyalty identifier of said user, said general loyalty identifier being associated with a plurality of specific loyalty programmes of said user;
• sending, to a loyalty identifier management server, a request to obtain a specific loyalty identifier of said user for said merchant, said request comprising at least said user's general loyalty identifier and at least one piece of identification data relating to said merchant, said identification data being location information relating to said transaction device;
• receiving, from said loyalty ID management server, a response to said request for obtaining and, if said response includes said user's specific loyalty ID for said merchant:
• processing (22) of at least one loyalty data item associated with said user's specific loyalty identifier for said merchant.

6. A method for processing loyalty data according to claim 5, **characterised in that** it comprises the following steps, if said response is negative:
• obtaining a predetermined general authorisation from said user to update said general loyalty identifier;
• obtaining (21) a specific loyalty identifier of said user for said retailer;
• sending, to said loyalty identifier management server, a request to update said user's loyalty identifier, said update request comprising said user's general loyalty identifier and said user's specific loyalty identifier for said retailer;
• processing (22) of at least one loyalty data item associated with said user's specific loyalty identifier for said retailer.

7. A method for processing loyalty data according to any one of claims 5 and 6, **characterised in that** said steps of obtaining a specific loyalty identifier of said user for said merchant and of processing are implemented via a specific loyalty programme management server associated with said merchant.

8. A method for processing loyalty data according to claim 6, **characterised in that** said step of obtaining a general loyalty identifier of said user is implemented via means of communication with a communication terminal of said user belonging to the group comprising:
• NFC;
• Bluetooth;
• MST (magnetic stripe emulation).

9. A loyalty identifier management server comprising means for generating a general loyalty identifier (ID_Gen_UI) for a previously identified user (UI, said general loyalty identifier (ID_Gen_UI) being associated with a plurality of specific loyalty programmes of said user (UI, and the following means:
• means for receiving, from a transaction device associated with a merchant, a request to obtain a specific loyalty identifier for said user for said merchant, said request to obtain comprising said general loyalty identifier of said user;
• means for obtaining at least one piece of identification data relating to said merchant, said identification data being location information relating to said transaction device;
• means for searching (13), based on said identification data of said merchant and said general loyalty identifier of said user, for said user's specific loyalty identifier for said merchant:
∘ if the search is successful, transmission to said transaction device of a response comprising said user's specific loyalty identifier for said merchant;
∘ if said search is unsuccessful, transmission to said transaction device of a negative response.

10. A transaction device comprising:
• means for obtaining, from a user, a general loyalty identifier of said user, said general loyalty identifier being associated with a plurality of specific loyalty programmes of said user;
• means for sending, to a loyalty identifier management server, a request to obtain a specific loyalty identifier of said user for said retailer, said request for obtaining comprising at least said user's general loyalty identifier and at least one piece of identification data for said merchant, said identification data being location information for said transaction device;
• means for receiving, from said loyalty identifier management server, a response to said request for obtaining, and if said response includes said user's specific loyalty identifier for said retailer:
• means for processing at least one loyalty data item associated with said user's specific loyalty identifier for said merchant.

11. A computer program product downloadable from a communication network and/or stored on a computer-readable medium and executable by a microprocessor,
**characterised in that** it comprises program code instructions for executing a method according to any one of claims 1 to 4, when executed on a computer.

12. A computer program product downloadable from a communication network and stored on a computer-readable medium and/or executable by a microprocessor, **characterised in that** it comprises program code instructions for executing a method according to any one of claims 5 to 8, when executed on a computer.
